# EUROPÄISCHE PATENTSCHRIFT

(11) **EP 1 919 995 B1**
(45) Veröffentlichungstag und Bekanntmachung des Hinweises auf die Patenterteilung: **01.03.2017**
(21) Anmeldenummer: 06792957.0
(22) Anmeldetag: 23.08.2006
(51) Int. Cl.: C08K 3/08, C08K 3/24, C09D 105/08, C09D 5/14

(54) **WÄSSRIGE ZUSAMMENSETZUNG FÜR AUßEN-, INNEN-, FASSADEN- UND DACHANSTRICHE**
AQUEOUS COMPOSITION FOR EXTERNAL, INTERNAL, FRONTS AND ROOF COVERINGS
COMPOSITION AQUEUSE POUR PEINTURES D'EXTERIEUR, D'INTERIEUR, DE FAÇADE ET DE TOIT

(30) Priorität: 29.08.2005 DE 102005041006
(43) Veröffentlichungstag der Anmeldung: 14.05.2008
(73) Patentinhaber: Fraunhofer-Gesellschaft zur Förderung der angewandten Forschung e.V., 80686 München (DE); Bioni CS GmbH, 46149 Oberhausen (DE)
(72) Erfinder: KNOLL, Sven, 46147 Oberhausen (DE); SCHMID, Helmut, 72250 Freudenstadt (DE)
(74) Vertreter: Gille Hrabal
(86) Internationale Anmeldenummer: PCT/EP2006/065575
(87) Internationale Veröffentlichungsnummer: WO 2007/025914

(56) Entgegenhaltungen:
- WO-A-00/49219
- WO-A-98/11169
- WO-A-03/103392

## Beschreibung

Die vorliegende Erfindung betrifft eine wässrige Zusammensetzung für Außen-, Innen-, Fassaden- und Dachanstriche, die eine biozide Wirkung aufweist. Als Zusammensetzung für Außen-, Innen-, Fassaden- und Dachanstriche werden heute insbesondere im Bausektor Dispersionsfarben vielfältig eingesetzt. Insbesondere bei der Anwendung in Bereichen mit hoher Luftfeuchtigkeit, wie z.B. in Feuchträumen, z.B. in der Lebensmittel- und Textil-Industrie, in Schwimmbädern, Küchen, Badezimmern und Kellern, aber auch in Wohn-, Schlaf- und Geschäftsräumen und gleichzeitiger Anwesenheit organischer Komponenten besteht die Gefahr der Schimmelbildung. Ebenso besteht ein erhöhtes Risiko der Schimmelpilzbildung in Bereichen, in denen eine fehlende oder unzureichende Isolierung der Außenwände und/oder Wärmebrücken bzw. thermische Schwachstellen in der Gebäudehülle vorliegen. Im Bereich von Fassaden und Dächern ist in der Praxis vielfach der Befall der Oberflächen mit Algen- und Moosflechten sowie Pilzen feststellbar. Nach dem Stand der Technik werden in Anstrich-Zusammensetzungen für Innen-, Fassaden- und Dachanstriche biozide Additive eingesetzt, die gleichzeitig als Film- und Topfkonservierer wirken, die aber den Nachteil der Toxizität aufweisen, weshalb der Einsatz dieser Stoffe nach Art und Menge gesetzlichen Bestimmungen unterliegt. Außerdem weisen diese Stoffe aufgrund ihrer Flüchtigkeit sowie ihrer mangelnden chemischen Langzeitstabilität eine zeitlich stark begrenzte Wirkungsdauer auf. So werden beispielsweise Isothiazolinone häufig in Dispersionsfarben als Konservierungsstoff eingesetzt. Es ist jedoch bekannt, dass Verbindungen wie 5-Chlor-2-methyl-2,3-dihydroisothiazol-3-on (MCI) und 2-Methyl-2,3-dihydroisothiazol-3-on (MI) allergenes Potenzial aufweisen bzw. toxisch sind.

Die Erfinder der vorliegenden Erfindung stellten sich daher die Aufgabe, eine wässrige Zusammensetzung für Außen-, Innen-, Fassaden- und Dachanstriche, insbesondere eine Dispersionsfarbe bereitzustellen, die über eine hohe biozide Wirkung und damlt eine äußerst geringe Anfälligkeit gegenüber der Besledlung durch Mikroorganismen aufweist. Darüber hinaus fanden sie, dass die biozid wirksamen Bestandteile den Anstrich nicht verfärben, mit den Anstrichmittel-Komponenten verträglich, nicht flüchtig, geruchlos und insbesondere nicht toxisch sowie dauerhaft wirksam sind.

Obwohl die biozide Wirkung von Silber selt dem Mittelalter bekannt ist und von dieser Wirkung auch heute In bestimmten Anwendungen Gebrauch gemacht wird, wird in keinem der diese Anwendungen betreffenden Dokumente die Möglichkeit der Verwendung von elementarem Silber in flüssigen, wässrigen Anstrich-Zusammensetzungen für Innen-, Fassaden- und Dachanstriche nahegelegt oder gar erwähnt.

Im folgenden werden einige bei einer diesbezüglichen Recherche aufgefundenen Dokumente aufgeführt, die Anwendungen von elementarem Silber als antimikrobielles bzw. antifungales Mittel beschreiben.

So offenbart die WO 03/080911 ein faserartiges Material, das eine Nano-Silberbeschichtung umfasst, die Nano-Silberpartikel mit Durchmessern unterhalb 100 nm aufwelsen. Die Herstellung dieses faserartigen Materials erfolgt durch Eintauchen von entfetteten Garnen In Nano-Silberlösungen. Aus der WO 2004/059027 ist ein Verfahren zum Abscheiden einer antimikrobiellen Oberfläche auf Substraten bekannt, bei dem antimikrobielle Metalle durch Plasmaabscheidung auf Substrate aufgetragen werden, Antimikrobielle Pulverlack-Zusammensetzungen sind bekannt aus den US 2004/0180098, US 2003/0096017. Aus der EP-A-1433871 ist ein Verfahren zur antibakteriellen Ausstattung einer Oberfläche eines Körpers unter Verwendung von nanopartikulären Metallen bekannt. Aus der WO 03/024494 sind ontimikrobielle Kleb- und Beschichtungsstoffe bekannt, Dabei handelt es sich jedoch um rein organische Zusammensetzungen, die eine Wirksamkeit In wässrigen Zusammensetzung nicht erwarten lassen und außerdem den heutigen ökologischen Anforderungen nicht gerecht würden.

Keines der genannten Dokumente offenbart somit die Anwendung von (a) elementarem Silber und (b) Chitosan und/oder Chitosan-Derivaten, wobei die Zusammensetzung Chitosan und/oder Chitosan-Derivate in einer Menge von 0,1 bis 10 Mass.-%, bezogen auf das Gewicht der wässrigen Zusammensetzung enthält als blozides Mittel in wässrigen Anstrich-Zusammensetzungen für Außen-, Innen-, Fassaden- und/oder Dachanstriche, insbesondere wässrige Dispersionsfarben oder legt diese Anwendung nahe.

Die vorliegenden Erfinder fanden überraschend, dass Silber unter den speziellen Bedingungen wässriger Anstrich-Zusammensetzungen für Außen-, Innen-, Fassaden- und/oder Dachanstriche eine blozide Wirkung entfaltet. Die Erfinder fanden weiterhin, dass eine besonders ausgeprägte biozide Wirkung erzielt wird, wenn die erfindungsgemäße wässrige Anstrich-Zusammensetzung Silber In nanopartikulärer Form enthält. Eine noch stärker ausgeprägte blozide Wirkung kann erzielt werden, wenn der wässrigen Anstrich-Zusammensetzung neben nanopartikulärem elementarem Silber, Silber in Form eines löslichen Silbersalzes, wie insbesondere Silbernitrat zugesetzt wird. Über das Mengenverhältnis von elementarem Silber zu lösilchem Silbersalz lässt sich dabei insbesondere für ein gegebenes Bindemittelsystem die Bloverfügbarkeit der Silberionen, mithin die blozide Wirkung des Anstrichmittels als Funktion der Zeit maßgeschneidert einstellen. Besonders überraschend fanden die vorliegenden Erfinder, dass durch den Zusatz von Chitosan zu der erfindungsgemäßen Anstrichzusammensetzung eine synergistische Stelgerung der bioziden Wirkung erzielt wird. Eine weitere Verbesserung lässt sich durch die zusätzliche Verwendung von nanopartikulärem ZnO (Zinkoxid) erzielen, Bevorzugt weist das nanopartikuläre Zinkoxid eine mittlere Korngröße von weniger als 500 nm, bevorzugter weniger als 100 nm, noch bevorzugter weniger als 50 nm auf. Besonders wirksam ist der Bereich der Partikelgröße von 5 bis 50 nm. Die Partikelgröße wird durch Photonenkorrelationsspektroskopie bestimmt. Wenn die Zusammensetzung nanopartikuläres Zinkoxid enthält, llegt es zweckmäßig In einer Menge von 0,000001 bis 25 Mass.-% bezogen auf die Gesamtmasse der Zusammensetzung vor.

Den Erfindern gelang es somit eine ökologisch und gesundheitlich hoch verträgliche wässrige Anstrich-Zusammensetzung bereltzusteilen, die nicht-flüchtige antimikrobielle Mittel enthält und daher keine allergenen bzw. toxischen Wirkungen ausübt.

Gegenstand der vorliegenden Erfindung sind daher wässrige Zusammensetzungen für Aussen-, Innen-, Fassaden- und/oder Dachanstriche, die (a) elementares Silber und (b) Chitosan und/oder Chitosan-Derivate enthalten, wobei die Zusammensetzung Chitosan und/oder Chitosan-Derivate in einer Menge von 0,1 bis 10 Mass.-%, bezogen auf das Gewicht der wässrigen Zusammensetzung enthält. Wässrige Zusammensetzungen für Außen-, Innen-, Fassaden- und/oder Dachanstriche im Sinne der Erfindung sind wasserbasierende Beschichtungsmittel, insbesondere wässrige Kunststoff-Dispersionsfarben, die mindestens ein insbesondere wasserdispergierbares organisches und/oder anorganisches Bindemittel darin dispergiert enthalten. Sie werden bevorzugt eingesetzt bei Erst- und Erneuerungsanstrichen von Innenräumen, Fassaden- und Dachflächen. Ihr Auftrag erfolgt insbesondere durch Rollen oder Streichen, bei Systemen mit niedriger Viskosität auch durch Spritzen. In jedem Fall ist die erfindungsgemäße Zusammensetzung bei Raumtemperatur (20°C) flüssig bzw. streichbar.

Die erfindungsgemäße Anstrich-Zusammensetzung enthält Silber. Besonders bevorzugt enthält die erfindungsgemäße Anstrich-Zusammensetzung Silber in nanopartikulärer Form, d.h. die Partikel des elementaren Silbers weisen eine mittlere Partikelgröße (Durchmesser) von weniger als 500 nm, bevorzugter weniger als 100 nm, noch bevorzugter weniger als 50 nm auf. Besonders wirksam ist eine mittlere Partikelgröße von 5 bis 50 nm. Die Partikelgröße wird dabei bestimmt durch Photonenkorrelationsspektroskopie.

Durch die Verwendung des nanopartikulären Silbers in den erfindungsgemäßen Zusammensetzungen wird bezogen auf den Silbergehalt, eine unerwartet hohe biozide Wirkung nachhaltig erzielt, so dass die Menge des verwendeten Silbers gering bleiben kann.

Im Unterschied zu den bislang in Anstrichsystemen verwendeten organischen bioziden Wirkstoffen weist das erfindungsgemäß verwendete nanopartikuläre Silber eine hohe chemische Langzeitstabilität auf. Da Anstrichfarben oft über mehrere Jahre aufgetragen bleiben, und insbesondere Außenanstriche starken Witterungseinflüssen, wie Regen und Sonneneinstrahlung, ausgesetzt sind, stellt die erfindungsgemäße Verwendung des stabilen nanopartikulären Silbers eine wesentliche Verbesserung bei der Bereitstellung biozid ausgestatteter wässriger Anstrichsysteme insbesondere im Hinblick auf die Langzeitwirkung dar.

Mechanistisch gesehen bildet sich auf den Nano-Silber-Partikeln eine dünne, nicht vollständig geschlossene Oxidschicht mit Ag₂O als Hauptkomponente. Die Solvolyse führt zur Bildung von Ag⁺-Kationen, die als eigentliche Wirkstoff-Komponente die Thlo-Enzyme der Mikroorganismen blockieren.

Der Gehait der erfindungsgemäßen Anstrich-Zusammensetzung an elementarem, insbesondere nanopartikulärem Silber beträgt bevorzugt weniger als etwa 500 ppm, bevorzugt weniger als etwa 100 ppm. Besonders bevorzugt liegt das nanopartikuläre Silber in einer Menge von 1 bis 100 ppm noch bevorzugter von 1 bis 10 ppm bezogen auf die Gesamtmasse der Anstrich-Zusammensetzung vor.

Die Erfinder fanden weiterhin überraschend, dass der Zusatz von Silberlonen durch den Zusatz von bevorzugt wasserlöslichen Silbersalzen, wie insbesondere Silbernitrat, in Kombination mit dem nanopartikulären Silber eine synergistische Wirkung hinsichtlich der bioziden Wirkung bezogen auf die Gesamtmenge des eingesetzten Silbers bewirkt.

Wie bereits erwähnt, ist es darüber hinaus möglich, über die Einstellung des Mengenverhältnisses von nanopartikulärem Silber zu Silberionen für ein gegebenes Bindemittelsystem, die Bioverfügbarkeit des Silbers als Funktion der Zeit maßgeschneidert einzustellen.

Die Menge des verwendeten löslichen Silbersalzes beträgt bezogen auf die Gesamtmasse der Anstrich-Zusammensetzung bevorzugt weniger als etwa 500 ppm, bevorzugt weniger als etwa 100 ppm. Besonders bevorzugt liegt die Menge des Silbersalzes bei 1 bis 100 ppm noch bevorzugter von 1 bis 10 ppm bezogen auf die Gesamtmasse der Anstrich-Zusammensetzung.

Den vorilegenden Erfindern gelang es weiterhin überraschend durch den Zusatz von Chitosan (Handelsbezeichnung für das deacylierte Chitin (CAS 9012-6-4. C. - siehe Fledier, Lexikon der Hilfsstoffe Editio Cantor Verlag, 5. Auflage, 2002)) und/oder eines Chitosanderivates die biozide Wirkung der Anstrich-Zusammensetzung in synergistischer Weise zu steigern, so dass die Möglichkeit besteht, die Menge des verwendeten Silbers weiter zu verringern. Erfindungsgemäß einsetzbares Chitosan weist belspielsweise ein Molekulargewicht von 3000 bis 700000 auf und ist im Handel erhältlich (siehe z.B. EP-A-0 377 091). Die synergistische Wirkungsweise des Chitosans Im Zusammenwirken mit dem eingesetzten Silber beruht darauf, dass sich das biozide Wachstum nach unterschiedlichen Mechanismen vollzieht, wobei auch biochemische Prozesse beim Aufbau der Zellwand der Bakterien bzw. Pilze bedeutungsvoll sind. Chitosan stört den Stoffwechsel zur Bildung der Chitin-Zellwände und verhindert damit das Zellwachstum. Es war überraschend, dass das Chitosan diese Wirkung auch unter den speziellen chemischen Bedingungen wässriger Anstrichsysteme entfaltet.

Die Verwendung der Wirkstoff-Kombination aus Silber, insbesondere nanopartikulärem Silber, insbesondere in Kombination mit Silbersalzen, und Chitosan eröffnet weiterhin einen zusätzlichen Freiheitsgrad bei der Einstellung der Bioverfügbarkeit und Leaching-Rate des Silbers als Funktion des konkreten Anforderungsprofils und des konkreten Anstrichsystems. Erfindungsgemäß wird das Chitosan im Falle seiner Verwendung bevorzugt in einer Menge von etwa 0,1 bis 10 Mass.-%, bevorzugt von weniger als etwa 5 Mass.-%, noch bevorzugter weniger als etwa 1 Mass.-%, jeweils bezogen auf die Gesamtmasse der Zusammensetzung, verwendet. Die eingesetzte Mindestmenge des Chitosans im Falle seiner Verwendung liegt bei mindestens etwa 0,1 Mass.-% (Massenprozent) jeweils bezogen auf die Gesamtmasse der Zusammensetzung.

Erfindungsgemäß ist auch die Verwendung von Chitosanderivaten möglich, z.B. N,O-Carboxymethylchitosan, Chitosanhydrochlorid, Chitosanacetat und Chitosanlactat. In Ergänzung zur bioziden Wirkung ist die Absorber-Wirkung auf Grund der Sekundär- bzw. Tertiär-Struktur der Molekülkette hervorzuheben. Es können ein oder mehrere Chitosanderivate in Kombination verwendet werden. Weiterhin können ein oder mehrere Chitosanderivate auch in Kombination mit Chitosan zur Anwendung kommen. Da sich die Chitosan-Derivate insbesondere in ihrer Wasserlöslichkeit sowohl untereinander als auch im Vergleich zum Chitosan unterscheiden, ergeben sich weitere Möglichkeiten die Bioverfügbarkeit, mithin die biozide Wirkung (biozides Wirkungsspektrum und Wirkungsdauer), gezielt einzustellen.

Die erfindungsgemäße Anstrich-Zusammensetzung enthält bevorzugt mindestens ein insbesondere wasserdispergierbares Bindemittel, insbesondere mindestens ein anorganisches und/oder organisches Bindemittel.

Organische Bindemittel werden beispielsweise aus der Gruppe ausgewählt, die aus vinylhaltigen, wie styrolhaltigen, acrylathaltigen und vinylacetathaltigen, urethanhaltigen, esterhaltigen Polymeren oder Copolymeren davon, Silikonharzen und Epoxidharzen besteht. Bevorzugte organische Bindemittel sind Acrylharze. Diese weisen um wasserdispergierbar zu sein, im allgemeinen insbesondere ionische Gruppen, wie beispielsweise Ammoniumgruppen auf. Erfindungsgemäß können ein oder mehrere Bindemittel miteinander kombiniert verwendet werden.

Die organischen Bindemittel sind in den erfindungsgemäßen Zusammensetzungen zweckmäßig in Mengen von bis zu 60 Mass.-% enthalten. Die Mindestmenge der organischen Bindemittel beträgt zweckmäßig etwa 5 Mass.-% bezogen auf die Gesamtmenge der Zusammensetzung. Bevorzugt enthalten die erfindungsgemäßen Zusammensetzungen etwa 10 bis 40 Mass.-% des organischen Bindemittels.

Die anorganischen Bindemittel werden beispielsweise ausgewählt aus Kalk, Weißzement und Kaliwasserglas, wobei letzteres bevorzugt ist. Kalk kommt beispielsweise in Form von Calciumhydroxid, als Sumpfkalk etc. zum Einsatz, Weißzement in Pulverform und Kaliwasserglas als wässrige Lösung von Kaliumsilicat (Fixativ) als Bindemittel für sogenannte Silicatfarben zum Einsatz. Die Menge des anorganischen Bindemittels beträgt zweckmäßig maximal etwa 30 Mass.-%, mindestens zweckmäßig etwa 1 Mass.-% bezogen auf die Gesamtmenge der Zusammensetzung.

Anorganische und organische Bindemittel können auch in Kombination verwendet werden. Organische Bindemittel werden bevorzugt ohne anorganische Bindemittel verwendet. Anorganische Bindemittel werden bevorzugt in Kombination mit organischen Bindemitteln verwendet.

Die erfindungsgemäße Zusammensetzung ist eine wässrige Zusammensetzung. Sie enthält daher bevorzugt mindestens 10, bevorzugter mindestens 20, noch bevorzugter mindestens 30 Mass.-% Wasser. Sie kann zusätzlich auch organische Lösungsmittel enthalten. Die Menge der organischen Lösungsmittel ist jedoch bevorzugt weniger als etwa 20 Mass.-%, bevorzugter weniger als etwa 10 Mass.-%, noch bevorzugter weniger als etwa 5 Mass.%.

Die erfindungsgemäße Zusammensetzung ist bevorzugt eine sogenannte Kunststoffdispersionsfarbe, bei der es sich nach DIN EN 971-1: 1996-09 um einen Beschichtungsstoff handelt, in dem ein organisches Bindemittel in Wasser dispergiert vorliegt. Sie liegen in der Glanzgradeinstellung von matt bis glänzend vor und werden insbesondere für Erst- und Erneuerungsanstriche an Wänden von Innenräumen, Fassaden- oder Dachflächen verwendet, wobei der Auftrag bevorzugt durch Rollen oder Streichen erfolgt.

Des weiteren enthalten die erfindungsgemäße Anstrich-Zusammensetzungen zweckmäßig etwa bis zu 50 Mass.-% Farbmittel, wie Pigmente und Farbstoffe. Beispiele für Pigmente sind Titandioxid, Eisenoxid, Magnesiumoxid, Zinkchromat, Ruß, Bariumsulfat. Farbstoffe schließen beispielsweise Pararot, Thioindigo, Antrachinon, Phthalocyaninblau und Azofarbstoffe ein.

Weiterhin können typische anorganische oder organische Füllstoffe, wie Carbonate, z.B. Calciumcarbonat; Sulfate, z.B. Calciumsulfat; Silikate, z.B. Talk, Quarz; Kieselsäure, z.B. Glaskugeln, Glasfasern; Mikrohohlkugeln; Organische Füllstoffe, z.B. organische Mikrohohlkugeln, Polymerfasern, Cellulosefasern verwendet werden.

Weiterhin können typische Additive eingesetzt werden wie Verarbeitungshilfsmittel, wie Dispergierhilfen, Verdickungsmittel, Entschäumer, Stabilisatoren, Vernetzer und etc.

Die erfindungsgemäßen Zusammensetzungen besitzen die Fähigkeit, insbesondere das Wachstum von Bakterien, Pilzen aber auch überraschend das Wachstum von Algen, Moosen und Flechten abhängig von der Konzentration der bioziden Wirkstoffkomponenten zu hemmen, zu kontrollieren oder zu eliminieren. Die Wirksamkeit gegenüber Flechten und Moosen ist insbesondere bei Dachanstrichen sehr nützlich, da Dächer, wie bekannt ist, bereits nach wenigen Jahren bewachsen werden können, was zu einer erheblichen ästhetischen aber auch funktionalen Beeinträchtigung führt.

Insbesondere kann die erfindungsgemäße Zusammensetzung das Wachstum von Bakterien, wie Gram-positiven Bakterien und Gram-negativen Bakterien hemmen bzw. stoppen, wie beispielsweise von Chlamydia trachomatis, Citrobacter, Providencia stuartii, Vibrio vulnificus, Staphylococcus aureas, Staphyloccus epidermidus, Escheria coli, Pseudomonas maltophilia, Serratia marcesens, Bacillus subtilis, Bacillus cloacae, Bacillus allantoides, Bacillus foecalis alkaligenes, Pneumobacillus, Nitrat-negativer Bacillus, Streptococcus facades, Streptococcus hemolyticus B, Salmonella typhinurium, Salmonella paratyphi C, Salmonella morgani, Pseudomonas aeruginosa. Die erfindungsgemäße Zusammensetzung kann ferner auch das Wachstum von bestimmten höheren Organismen hemmen, wie Algen, Pilze, filamentöse Pilze (Aspergillus, insbesondere Aspergillus niger, Aureobasidium, Botrytis, Candida albicans, Ceratostomella, Chaetomium, Cuvularla, Fusarlum, Gliocladium virens und Penicillium-Arten), Hefen und Sporen.

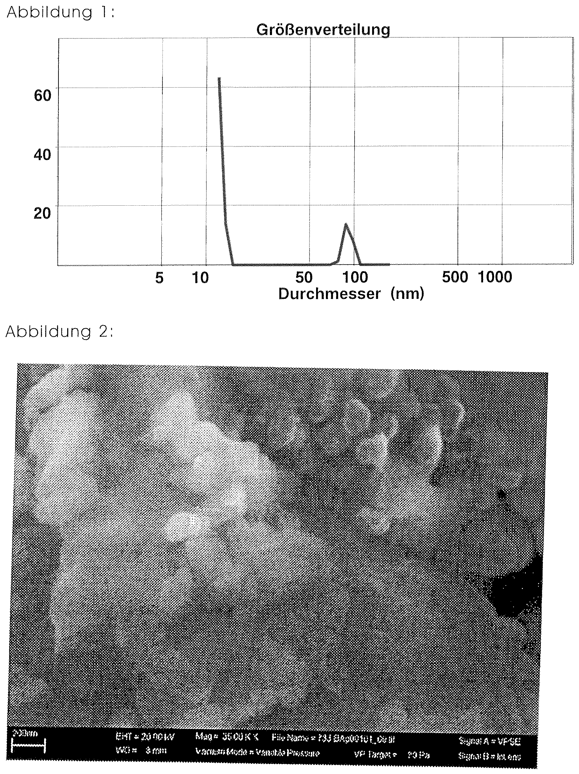

Die Herstellung der erfindungsgemäßen wässrigen Zusammensetzung erfolgt insbesondere durch Herstellung einer üblichen KunststoffDispersionsfarbe, der das nanopartikuläre Silber in Form einer Suspension zugesetzt wird. Nanopartikuläre Silbersuspensionen sind aus dem Stand der Technik bekannt und können kommerziell erhalten werden. Abbildung 1 zeigt beispielsweise das Ergebnis einer PCS-Analyse einer erfindungsgemäß anwendbaren Nano-Ag-Suspension (1 Vol.-% in H₂O).

In einer bevorzugten Ausführung erfolgt gleichzeitig der Zusatz von Silbernitrat zu den erfindungsgemäßen Anstrich-Zusammensetzungen. In einer weiteren bevorzugten Ausführungsform erfolgt der Zusatz des Chitosans bzw. der Chitosanderivate in den oben angegebenen Mengen.

In der Praxis wird im allgemeinen die Kombination der bioziden Wirkstoffe in Form einer wässrigen Suspension zur Einarbeitung in ein Anstrichmittel bereitgestellt.

Die erfindungsgemäßen wässrigen Anstrich-Zusammensetzungen können insbesondere in Feuchtbereichen, wie zum Beispiel Schwimmbädern etc. verwendet werden. Insbesondere erfolgt die Anwendung in Feuchträumen, wo eine Schimmelbildung unterdrückt werden soll, wie z.B. im Bereich von Kliniken oder im Bereich der Lebensmittelherstellung, wo bakterizide Oberflächen erforderlich sind, d.h. allgemein in Bereichen, wo besondere hygienische Anforderungen zu stellen sind.

Als Innenanstrichzusammensetzung kann die erfindungsgemäße wässrige Anstrich-Zusammensetzung insbesondere auf vorhandene Anstriche, Tapeten, alte und neue Putze, Gipskartonplatten, etc. aufgetragen werden.

Als Außenanstrichzusammensetzung kann die erfindungsgemäße wässrige Anstrich-Zusammensetzung insbesondere auf vorhandene Anstriche, alte und neue Putze, Kalksandstein, Ziegelmauerwerk, Faserzementplatten, Metall, wie Wellblech, etc. aufgetragen werden.

Als Dachanstrichzusammensetzung kann die erfindungsgemäße wässrige Anstrich-Zusammensetzung insbesondere auf Betondachsteine, Wellmetall, Tonziegel, (Kunst-)schieferplatten, faserzementhaltige Dachsteine und -platten, etc. aufgetragen werden.

Die Erfindung wird durch das folgende Ausführungsbeispiel näher erläutert.
Es wurde die folgende Mischung hergestellt:
Einer handelsüblichen wässrigen Dispersionsfarbe (BIO00101 der Firma Bioni-Shield, Oberhausen) wurden 100 ppm nanopartikuläres Silber mit der in Abbildung 1 dargestellten Korngrößenverteilung, 100 ppm Silbernitrat (bezogen auf die Menge des Silbers) und 1 Mass.-% Chitosan zugesetzt, und es wurde homogen eingearbeitet (In Abhängigkeit von einem geringeren Grad der Gefährdung im Hinblick auf den mikrobiellen Befall können geringere Gehalte der biozid wirksamen Additive verwendet werden).
Abbildung 2 zeigt eine REM-Aufnahme der hergestellten Probe. Erkennbar sind Teilchen um 200 nm Korngröße, die als Pigmente interpretiert werden. Die in Folge der geringen Konzentration vereinzelt auftretenden Partikel < 15 nm werden als nanopartikuläres Silber interpretiert.

Mit der oben hergestellten Anstrichfarbe wurde deren biozide Wirksamkeit in einem Suspensionstest in Anlehnung an die Vorgaben der Pharm. Eu. 1997, Nachtrag 2001, 2.6 "Methoden der Biologie", 2.6.1 "Prüfung der Sterilität", SOP Prüfung auf Eignung von Nährmedien nach der Methode der Direktbeschichtung nachgewiesen. Der verwendete Mikroorganismus war der Pilz Aspergillus niger.

Die Direktausstriche mit Impföse gemäß dem oben beschriebenen Verfahren zeigten für die erfindungsgemäße Anstrich-Zusammensetzung keinerlei Pilzwachstum.

## Patentansprüche

1. Wässrige Zusammensetzung für Außen-, Innen-, Fassaden- und/oder Dachanstriche, enthaltend (a) elementares Silber, (b) Chitosan und/oder Chitosan-Derivate, wobei die Zusammensetzung Chitosan und/oder Chitosan-Derivate in einer Menge von 0,1 bis 10 Mass.-%, bezogen auf das Gewicht der wässrigen Zusammensetzung enthält.

2. Wässrige Zusammensetzung nach der Anspruch 1, enthaltend Silberpartikel.

3. Wässrige Zusammensetzung nach Anspruch 1 oder 2, enthaltend Silberpartikel mit einer durchschnittlichen Partikelgröße (Durchmesser) von weniger als 500 nm, wobei die Partikelgröße mittels Photonenkorrelationsspektroskopie bestimmt wird.

4. Wässrige Zusammensetzung nach einem der Ansprüche 1 bis 3, die ein Silbersalz enthält.

5. Wässrige Zusammensetzung nach einem der Ansprüche 1 bis 4, worin die Menge des elementaren Silbers bis zu 500 ppm, bezogen auf das Gewicht der wässrigen Zusammensetzung beträgt.

6. Wässrige Zusammensetzung nach einem der Ansprüche 1 bis 5, worin die Menge des Silbersalzes bis zu 500 ppm bezogen auf das Gewicht der wässrigen Zusammensetzung beträgt.

7. Wässrige Zusammensetzung nach einem der Ansprüche 1 bis 6, worin die Chitosan-Derivate aus N,O-Carboxymethylchitosan, Chitosanhydrochlorid, Chitosanacetat und Chitosanlactat ausgewählt werden.

8. Wässrige Zusammensetzung nach einem der Ansprüche 1 bis 7, die mindestens ein Bindemittel enthält.

9. Wässrige Zusammensetzung nach einem der Ansprüche 1 bis 8, die mindestens ein organisches oder anorganisches Bindemittel enthält.

10. Wässrige Zusammensetzung nach einem der Ansprüche 1 bis 9, die mindestens ein wasserdispergierbares organisches oder anorganisches Bindemittel enthält.

11. Wässrige Zusammensetzung nach einem der Ansprüche 1 bis 10, die mindestens ein organisches Bindemittel enthält, dass aus der Gruppe ausgewählt Ist, die aus vinylhaltigen, wie styrolhaltigen, acrylathaltigen und vinylacetathaltigen, urethanhaltigen, esterhaltigen Polymeren oder Copolymeren davon, Silikonharzen und Epoxidharzen besteht.

12. Wässrige Zusammensetzung nach einem der Ansprüche 1 bis 11, die mindestens ein anorganisches Bindemittel enthält, dass aus Kaliwasserglas ausgewählt wird.

13. Wässrige Zusammensetzung nach einem der Ansprüche 1 bis 12, die eine Kunststoffdispersionsfarbe ist.

14. Verwendung von nanopartikulärem Silber, In Kombination mit mindestens einem weiteren Bestandteil, der aus Chitosan, Chitosan-Derivaten und/oder nanopartikulärem ZnO ausgewählt wird, in wässrigen Zusammensetzungen für den Innen-, Fassaden-, Dach- und Außenanstrich.

15. Verwendung von nanopartikulärem Silber, in Kombination mit mindestens einem weiteren Bestandteil, der aus Chitosan, Chitosan-Derivaten und nanopartikulärem ZnO ausgewählt wird, als Biozid in wässrigen Zusammensetzungen für den Innen-, Fassaden-, Dach- und Außenanstrich und für Bindemittel oder Bindemittelenthaltende wässrige Zusammensetzungen für die Anwendung bei Innen-, Fassaden-, Dach- und Außenanstrichen.

16. Verwendung einer wässrigen Zusammensetzung, enthaltend mindestens ein Bindemittel, mindestens ein Dispergiermittel und elementares Silber, in Kombination mit mindestens einem weiteren Bestandteil, der aus Chitosan, Chitosan-Derivaten und nanopartikulärem ZnO ausgewählt wird, für den Innen-, Fassaden-, Dach- und/oder Außenanstrich.

17. Verfahren zum Beschichten von Gebäudeinnen-, Gebäudeaußen-, Gebäudefassaden- und Dach-Oberflächen, dass das Auftragen der wässrigen Zusammensetzung nach einem der Ansprüche 1 bis 13 umfasst.

## Claims

1. Composition aqueuse pour peintures d'extérieur, d'intérieur, de façades et/ou de toits contenant (a) de l'argent élémentaire, (b) du chitosan et/ou des dérivés de chitosan, dans laquelle la composition contient du chitosan et/ou des dérivés de chitosan en une quantité de 0,1 à 10 % en poids par rapport au poids de la composition aqueuse.

2. Composition aqueuse selon la revendication 1, contenant des particules d'argent.

3. Composition aqueuse selon la revendication 1 ou 2, contenant des particules d'argent ayant une taille moyenne de particules (diamètre) de moins de 500 nm, dans laquelle la taille de particules est déterminée au moyen d'une spectroscopie à corrélation de photons.

4. Composition aqueuse selon l'une des revendications 1 à 3, qui contient un sel d'argent.

5. Composition aqueuse selon l'une des revendications 1 à 4, dans laquelle la quantité d'argent élémentaire est de jusqu'à 500 ppm, par rapport au poids de la composition aqueuse.

6. Composition aqueuse selon l'une des revendications 1 à 5, dans laquelle la quantité du sel d'argent est de jusqu'à 500 ppm par rapport au poids de la composition aqueuse.

7. Composition aqueuse selon l'une des revendications 1 à 6, dans laquelle les dérivés de chitosan sont choisis parmi le N,O-carboxyméthylchitosan, le chlorhydrate de chitosan, l'acétate de chitosan et le lactate de chitosan.

8. Composition aqueuse selon l'une des revendications 1 à 7, qui contient au moins un liant.

9. Composition aqueuse selon l'une des revendications 1 à 8, qui contient au moins un liant organique ou inorganique.

10. Composition aqueuse selon l'une des revendications 1 à 9, qui contient au moins un liant organique ou inorganique dispersible dans l'eau.

11. Composition aqueuse selon l'une des revendications 1 à 10, qui contient au moins un liant organique qui est choisi dans le groupe consistant en polymères contenant du vinyle par exemple contenant un styrene, contenant un acrylate et contenant un acétate de vinyle, contenant un uréthane, contenant un ester, ou des copolymères de ceux-ci, des résines de silicone et des résines époxy.

12. Composition aqueuse selon l'une des revendications 1 à 11, qui contient au moins un liant inorganique qui est choisi dans le silicate de potassium.

13. Composition aqueuse selon l'une des revendications 1 à 12, qui est une peinture à dispersion de matières plastiques.

14. Utilisation d'argent nanoparticulaire, en combinaison avec au moins un autre composant qui est choisi parmi le chitosan, les dérivés de chitosan et/ou du ZnO particulaire, dans des compositions aqueuses pour peintures d'intérieur, de façades, de toits, et d'extérieur.

15. Utilisation d'argent nanoparticulaire, en combinaison avec au moins un autre composant qui est choisi parmi le chitosan, des dérivés de chitosan et du ZnO nanoparticulaire, en tant que biocide dans des compositions aqueuses pour peintures d'intérieur, de façades, de toits et d'extérieur et pour des liants ou des compositions aqueuses contenant un liant pour I'utilisation dans les peintures intérieures, de façades, de toits et d'extérieur.

16. Utilisation d'une composition aqueuse contenant au moins un liant, au moins un dispersant et de I'argent élémentaire, en combinaison avec au moins un autre composant qui est choisi parmi le chitosan, des dérivés de chitosan et du ZnO nanoparticulaire, pour peintures d'intérieur, de façades, de toits et d'extérieur.

17. Procédé de revêtement de surfaces d'intérieurs de bâtiments, d'extérieurs de bâtiments et de façades de bâtiments qui comprend l'application de la composition aqueuse selon l'une des revendications 1 à 13.

## Revendications

1. Aqueous composition for outdoor, indoor, façade and/or roof paints, containing (a) elementary silver, (b) chitosan and/or chitosan derivatives, wherein the composition contains chitosan and or chitosan derivatives in an amount of 0.1 to 10 % by mass based on the weight of the aqueous composition.

2. The aqueous composition according to claim 1 containing silver particles.

3. The aqueous composition according to claim 1 or 2 containing silver particles having an average particle size (diameter) of less than 500 nm, wherein the particle size is determined by photon correlation spectroscopy.

4. The aqueous composition according to any one of claims 1 to 3 containing a silver salt.

5. The aqueous composition according to any one of claims 1 to 4, wherein the elementary silver is present in an amount of up to 500 ppm based on the weight of aqueous composition.

6. The aqueous composition according to any one of claims 1 to 5, wherein the silver salt is present in an amount of up to 500 ppm based on the weight of aqueous composition.

7. The aqueous composition according to any one of claims 1 to 6, wherein the chitosan derivatives are selected from N,O-carboxymethyl chitosan, chitosan hydrochloride, chitosan acetate and chitosan lactate.

8. The aqueous composition according to any one of claims 1 to 7 containing at least one binding agent.

9. The aqueous composition according to any one of claims 1 to 8 containing at least one organic or inorganic binding agent.

10. The aqueous composition according to any one of claims 1 to 9 containing at least one water-dispersible organic or inorganic binding agent.

11. The aqueous composition according to any one of claims 1 to 10 containing at least one organic binding agent selected from the group consisting of vinyl-containing, such as styrene-containing, acrylate-containing and vinyl acetate-containing, urethane-containing, ester-containing polymers or copolymers thereof, silicone resins and epoxy resins.

12. The aqueous composition according to any one of claims 1 to 11 containing at least one inorganic binding agent selected from potassium water glass.

13. The aqueous composition according to any one of claims 1 to 12 which is a plastic dispersion paint.

14. Use of nanoparticulate silver in combination with at least one further component selected from chitosan, chitosan derivatives and/or nanoparticulate ZnO in an aqueous composition for indoor, facade, roof or outdoor paintings.

15. Use of nanoparticulate silver in combination with at least one further component selected from chitosan, chitosan derivatives and nanoparticulate ZnO as a biocide in aqueous compositions for indoor, facade, roof or outdoor painting and for binding agents or binding agent-containing aqueous compositions for the application in indoor, facade, roof or outdoor paints.

16. Use of an aqueous composition, containing at least one binding agent, at least one dispersing agent and elementary silver in combination with at least one further component selected from chitosan, chitosan derivatives and nanoparticulate ZnO for indoor, facade, roof or outdoor painting.

17. A method for coating surfaces of building interiors, building exteriors, building façades or roofs, comprising a step of applying the aqueous composition as defined in any one of claims 1 to 13.
